# FASCICULE DE BREVET EUROPEEN

(11) **EP 0 990 825 B1**
(45) Date de publication et mention de la délivrance du brevet: **09.02.2005**
(21) Numéro de dépôt: 99402313.3
(22) Date de dépôt: 22.09.1999
(51) Int. Cl.: F16K 1/30, F16K 31/60

(54) **Robinet de récipient de fluide sous pression équipé d'un levier de commande du passage du fluide**
Ventil für einen Behälter für Flüssigkeit unter Druck mit einem Hebel zur Steuerung des Flüssigkeitsdurchflusses
Valve for a vessel for a pressurized fluid with a lever to control the passage of fluide

(30) Priorité: 28.09.1998 FR 9812081
(43) Date de publication de la demande: 05.04.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Cannet, Gilles, 95620 Parmain (FR)
(74) Mandataire: Pittis, Olivier

(56) Documents cités:
- EP-A- 0 747 796
- DE-A- 1 903 500
- FR-A- 1 216 623
- US-A- 5 295 831

## Description

La présente invention concerne un robinet à actionnement par un levier, notamment destiné à un détendeur ou à un ensemble robinet/détendeur susceptible d'équiper un récipient de gaz sous pression, lequel robinet commande l'arrivée du gaz.

Classiquement, les bouteilles de gaz sous pression, telles les bouteilles de gaz de soudage ou les bouteilles de gaz médicaux, sont munies d'un robinet connecté à un détendeur de gaz ou, selon le cas, d'un ensemble plus ou moins compact combinant robinet et détendeur.

Cependant, les ensembles combinés robinet/détendeur sont préférés, étant donné qu'ils permettent une intégration facile dans un capotage ou chapeau de protection adapté, lequel capotage offre alors une ergonomie et une sécurité accrue.

En effet, les bouteilles de gaz, notamment les bouteilles de gaz de soudage, sont souvent utilisées dans des conditions sévères, par exemple sur les chantiers de construction engendrant des chocs sur les différentes parties de la bouteille.

En outre, durant le transport de ces bouteilles d'un site à un autre et leur manipulation, les bouteilles de gaz sont soumises, d'une part, à des chocs plus ou moins répétés sur les robinets et/ou les différents organes équipant le détendeur ou l'ensemble robinet/détendeur, et d'autre part, sont sujettes à des chutes susceptibles d'endommager tout ou partie des robinets et/ou des détendeurs équipant ces bouteilles.

Afin, de protéger ces parties sensibles de la bouteille, il est usuel d'équiper les bouteilles de capotage de protection entourant et protégeant tout ou partie du détendeur ou de l'ensemble robinet/détendeur.

Dès lors, le capotage de protection assure une protection efficace des organes cités à l'intérieur de celui-ci.

En outre, en pratique, la manipulation de robinet de type tournant est moins aisée et moins pratique que celle de robinet de type à levier.

En effet, il a été observé que les robinets de type tournant engendrent un risque non négligeable de confusion entre le sens d'ouverture et le sens de fermeture dudit robinet par l'utilisateur.

En outre, la manipulation, à l'intérieur du capotage de protection, de robinet de type tournant n'est pas non plus chose aisée, de par le manque de place disponible à l'intérieur dudit capotage de protection, et peut alors engendrer, dans certains cas, des blessures aux mains de l'utilisateur.

Afin de pallier ces problèmes, les robinets de type tournant sont progressivement remplacés par des robinets de type à levier, ainsi que décrit dans le document EP-A-747,796.

En effet, l'utilisation d'un levier de commande d'ouverture et de fermeture du gaz offre, outre la facilité de manoeuvre, une indication claire de l'état dans lequel se trouve le robinet, à savoir: ouvert lorsque le levier est en position haute et fermé lorsque le levier est en position basse par exemple.

Toutefois, pour pouvoir obtenir un débattement suffisant du levier de commande du détendeur, il est nécessaire d'aménager au sein du capotage de protection une ouverture destinée, d'une part, à permettre à l'utilisateur de manipuler le levier et, d'autre part, de permettre un débattement dudit levier entre notamment sa position de fermeture et sa position d'ouverture, et inversement.

Dés lors, l'extrémité proximale du levier, c'est-à-dire l'extrémité la plus proche de l'utilisateur, dépasse habituellement du capotage de protection lorsque le levier est en position d'ouverture, c'est-à-dire lorsque le levier est positionné vers le haut par exemple.

Or, on a remarqué, en pratique, qu'il existe un risque important de rupture du levier, lorsque celui-ci est en position ouverte et qu'il est soumis à un choc violent, tel par exemple la chute de la bouteille sur le sol, une percussion de la bouteille par un engin de chantier ou une charge lourde...

Or, la rupture du levier de manoeuvre peut engendrer un certain nombre de problèmes non acceptables, telles la difficulté de déterminer rapidement si la bouteille est en position ouverte ou fermée, la difficulté pour l'utilisateur de refermer la bouteille pour arrêter le débit de gaz ou, au contraire, de l'ouvrir pour vidanger totalement la bouteille avant de procéder à une réparation ou un remplacement complet du détendeur ou seulement du levier...

Pour pallier ce problème de rupture du levier en cas de chute ou de choc, on peut réaliser soit une modification ou un aménagement particulier du capotage de protection, soit diminuer la taille du levier pour le rendre plus court, de manière à ce qu'il ne dépasse plus de la bouteille en position ouverte.

Cependant, ces solutions ne sont pas sans inconvénient, étant donné que, d'une part, la modification du capotage de la bouteille engendre des surcoûts conséquents, étant donné qu'elle nécessite le remplacement des capotages de toutes les bouteilles d'un parc de bouteilles, ce qui n'est pas réaliste du point de vue industriel, et que, d'autre part diminuer la taille du levier engendre une plus grande complexité de manipulation de celui-ci et accentue la difficulté, pour l'utilisateur, à déterminer rapidement la position dans laquelle se trouve le levier (position d'ouverture ou de fermeture).

Le but de la présente invention est donc de trouver une solution simple, efficace et peu onéreuse pour pallier les problèmes susmentionnés, et qui soit compatible avec les exigences industrielles.

La présente invention concerne alors un robinet, notamment pour détendeur de fluide sous pression, en particulier pour récipient de fluide sous pression, comportant au moins un levier déplaçable entre au moins une position d'ouverture et au moins une position de fermeture, caractérisé en ce que le levier comprend au moins une zone élastiquement déformable et/ou de prérupture.

Dans le cadre de la présente invention, on entend par zone de prérupture, une zone de rupture préférentielle, c'est-à-dire une zone présentant une résistance plus faible à la rupture, en cas de choc par exemple, que le reste du levier.

En outre, dans le cadre de l'invention, on entend par robinet, non seulement un robinet proprement-dit mais aussi tout ensemble intégré robinet/détendeur.

Selon le cas, le robinet de l'invention peut comprendre une ou plusieurs des caractéristiques suivantes:
- le levier comprend une partie distale et une partie proximale, lesdites partie distale et partie proximale étant séparées par ladite zone déformable et/ou de prérupture;
- dans la zone de prérupture, le levier comprend au moins une entaille de prérupture, de préférence une entaille en "V";
- le levier comprend au moins au niveau de l'entaille de prérupture, un revêtement, de préférence un gainage, en un matériau élastiquement déformable et/ou résistant au déchirement;
- le matériau élastiquement déformable et résistant au déchirement est un matériau polymère et/ou élastomère, de préférence un polymère vinylique ou de type caoutchouc;
- le matériau élastiquement déformable et résistant au déchirement est de couleur vive, de préférence d'un ton de rouge ou d'orange.

De préférence, le robinet selon l'invention équipe un ensemble détendeur de gaz.

La présente invention concerne, en outre, un récipient de fluide sous pression, notamment une bouteille de gaz sous pression, équipée d'un robinet selon l'invention, ainsi que l'utilisation d'un tel robinet ou d'un tel récipient de fluide sous pression dans une opération de soudage.

Par bouteille de gaz, on entend un récipient de forme allongée susceptible de contenir un gaz ou un mélange gazeux à l'état liquide et/ou gazeux.

La présente invention va maintenant être décrite plus en détail en référence aux figures annexées données à titre illustratif, mais non limitatif de l'invention.

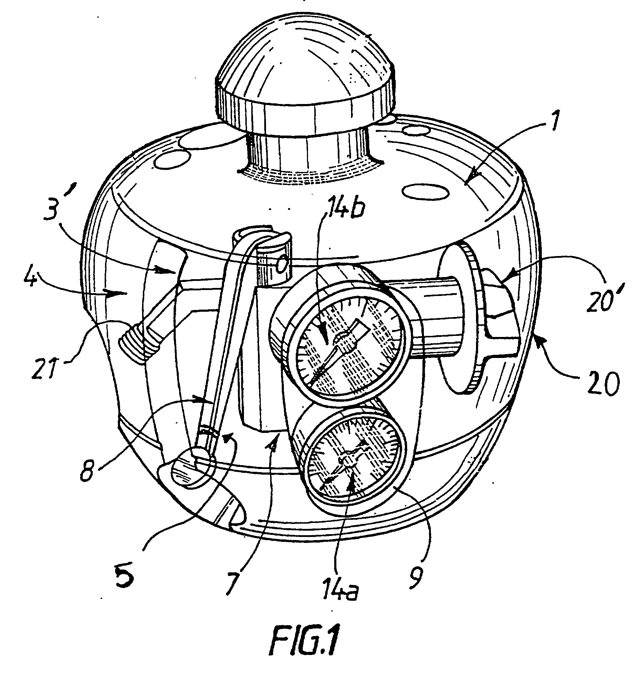

La figure 1 est une vue en perspective d'un ensemble manomètre/détendeur susceptible d'équiper une bouteille 2 de gaz, par exemple une bouteille de gaz de soudage ou une bouteille de gaz médical, lequel robinet/détendeur 7 est inséré à l'intérieur d'un capotage de protection 1 réalisé en un matériau plastique ou métallique par exemple.

Le capotage de protection 1 comprend trois parties, à savoir une partie inférieure ou base destinée à être montée sur le col de la bouteille de gaz, une partie intermédiaire 20 ou coque abritant l'essentiel du robinet/détendeur 7 et comportant une paroi 4 périphérique, et une partie supérieure 18 ou coiffe portant un pommeau 15 de manipulation.

La paroi 4 latérale périphérique de la partie intermédiaire 20 comporte un certain nombre de découpes ou évidements 3', 9 pour permettre l'accès au raccord 21, au bouton 20', aux manomètres 14a et 14b, et au levier 8 commandant l'arrivée du gaz contenu dans la bouteille 2.

Plus précisément, l'évidement 3' ayant sensiblement la forme d'une fente longitudinale permet le libre débattement du levier 8 entre ses positions d'ouverture (PO) et de fermeture (PF) de l'arrivée du gaz.

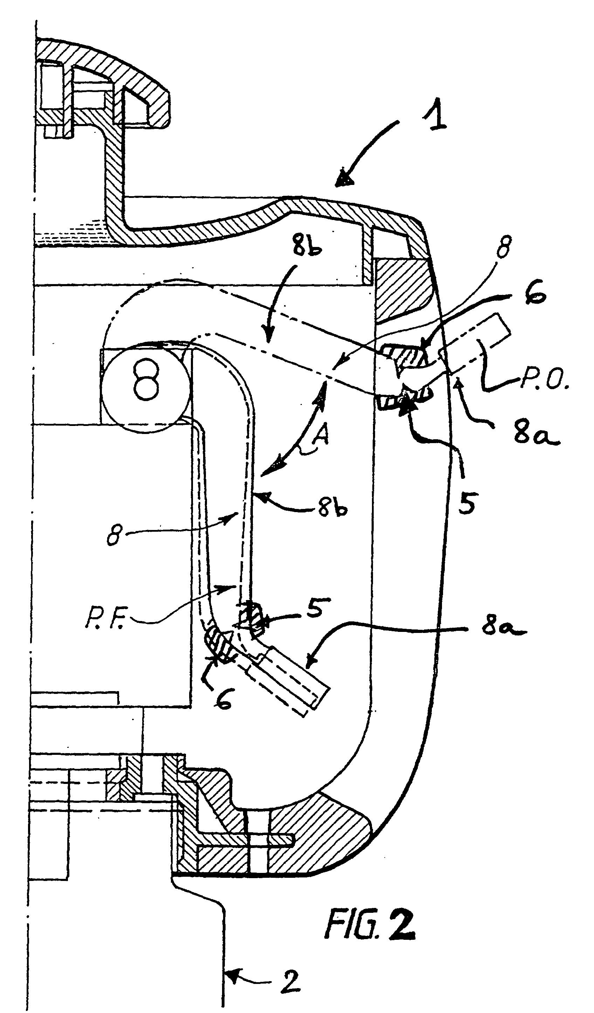

Ceci apparaît plus distinctement sur la figure 2, qui représente une coupe longitudinale d'un demi-capotage de protection 1 selon la figure 1, et où on a schématisé, en outre, le trajet A du levier 8 entre une position de fermeture (PF) et une position d'ouverture (PO).

Le levier 8 est normalement abrité, en position de fermeture (PF), dans le capotage 1 de protection.

Par contre, en position d'ouverture (PO), l'extrémité proximale 8a du levier 8 dépasse du capotage 1 de protection (levier en position haute).

En général, le capotage 1 est réalisé en un matériau plastique résistant ou en un métal, en particulier un alliage léger ou en fonte malléable.

Si le chapeau ou capotage de protection 1 permet d'éviter ou de minimiser les détériorations de l'ensemble robinet/manomètre/détendeur et, en particulier, des parties fragiles de cet ensemble, tels les manomètres 14a et 14b, celui-ci ne permet pas, à lui seul, de protéger l'extrémité proximale 8a du levier 8 de commande de l'arrivée des gaz, cas de chute ou de choc.

Afin de résoudre le problème et les conséquences engendrés par la rupture du levier 8 lors d'un choc sur celui-ci, la présente invention propose d'aménager sur ledit levier 8 une zone 3 déformable et/ou de prérupture.

Selon le premier mode de réalisation de la présente invention, la solution proposée consiste à aménager une zone de prérupture, c'est-à-dire un point de rupture préférentielle et privilégiée, dans le levier 8, de manière à obtenir une rupture contrôlée et parfaitement localisée dudit levier en cas de choc sur celui-ci.

En effet, selon ce mode de réalisation, on réalise un aménagement du levier 8, par exemple une ou plusieurs entailles au sein dudit levier 8, de manière à créer un point de rupture préférentielle au niveau duquel se brisera le levier en cas de choc violent sur celui-ci, mais tout en préservant à la fois l'axe de rotation dudit levier et en laissant subsisté une longueur de levier suffisante pour permettre une manipulation facile de celui-ci par l'utilisateur.

La position de la zone de prérupture, c'est-à-dire de l'entaille 3 pratiquée au sein dudit levier 8, est choisie pour permettre, en cas de rupture du levier, à l'utilisateur de passer un doigt ou un outil à l'intérieur du chapeau de protection et autoriser ensuite une commande relativement facile de l'arrivée des gaz.

Selon une variante préférée, la zone de prérupture est gainée par une matière présentant une résilience, une élasticité et/ou une résistance au déchirement, par exemple un matériau polymère, telle que ce gainage puisse résister, sans se briser ou se déchirer totalement, en cas de choc violent engendrant une rupture du levier 8 au niveau de la zone de prérupture.

Ainsi, même après rupture, la partie proximale 8a du levier 8 reste fixée à la partie distale commandant le passage de gaz, grâce à la présence de ce gainage résistant.

Il convient de choisir une matière de gainage ayant une température de transition vitreuse inférieure aux températures auxquelles le robinet/détendeur 7 et le levier 8 seront soumis durant leur utilisation.

En outre, le fait de prévoir un gainage autour du levier 8 au niveau de la zone de prérupture 3 permet, en cas de rupture dudit levier 8, de protéger la main de l'opérateur de coupure ou blessure par des arrêtes vives et blessantes susceptibles d'être présentes sur les parties brisées du levier 8.

Ce mode de réalisation est représenté sur la figure 2 où l'on voit que la zone de prérupture est obtenue en aménageant une ou plusieurs entailles 5 en V dans le levier 8, de manière à ce qu'en cas de rupture, le levier 8 se brise au niveau desdites entailles 5 séparant la partie proximale 8a de la partie distale 8b du levier 8.

Préférentiellement, on choisit pour réaliser le levier 8, un matériau sensible à l'effet d'entaille, par exemple, un acier de type ferritique inoxydable (13% de chrome) préalablement traité pour en grossir le grain par le biais d'un chauffage à 1 000°C environ, à ce titre on éliminera, par contre, les aciers austénitiques et les alliages légers.

En outre, le gainage 10 peut être réalisé en un matériau polymère, tel un plastique vinylique, lequel peut être déposé ou trempé sur toute ou partie de l'extrémité proximale du levier 8.

Des essais de rupture de levier lors de choc selon deux directions perpendiculaires, dans un plan orthogonale à l'axe de levier, ont montré qu'en cas de rupture du levier 8, un tel gainage plastique 6 résiste à ladite rupture du levier et assure ainsi une liaison entre les deux parties proximale 8a et distale 8b du levier 8 brisé.

Avantageusement, on choisit un matériau plastique présentant une couleur vive, telle une couleur rouge ou orange qui sont des couleurs habituellement associées à la sécurité en milieu industriel et artisanal.

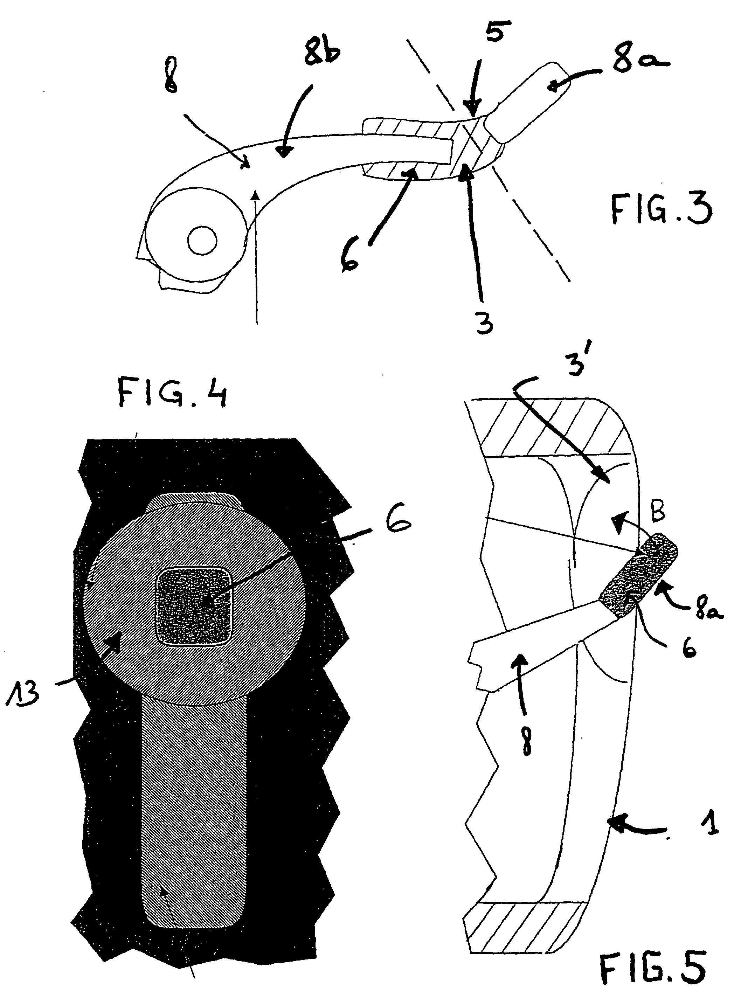

Selon un deuxième mode de réalisation de l'invention, représenté sur les figures 3 à 5, on équipe le robinet d'un levier 8 présentant une zone déformable 3 séparant les parties proximale 8a et distale 8b du levier 8.

En d'autres termes, la solution proposée selon ce deuxième mode de réalisation consiste à réaliser le levier 8 en deux parties

L'une rigide comprenant la partie distale 8b du levier 8 restant en permanence à l'intérieur du capotage de protection 1 et reliée au robinet via une came de manoeuvre.

L'autre, à savoir la partie proximale 8a du levier 8 dépassant du chapeau de protection en position ouverte (PO), suffisamment déformable pour ne pas être cassée par un choc ou un cisaillement en cas de chute ou de roulement de la bouteille sur laquelle le robinet est monté alors que le levier 8 est en position ouverte (PO) et suffisamment rigide pour autoriser la manoeuvre d'ouverture et de fermeture de l'arrivée des gaz via le levier 8.

Selon ce mode de réalisation, les parties proximale 8a et distale 8b sont dissociées l'une de l'autre, mais tout en étant reliées l'une à l'autre par le biais d'une pièce souple surmoulée 6, de préférence une pièce élastiquement déformable, par exemple une pièce en matériau polymère ou élastomère.

Ainsi, en cas de chute de la bouteille, l'extrémité proximale 8a du levier 8 ne se brisera pas, mais rentrera à l'intérieur de la fente 3' ou d'un logement, telle une cuve 13, aménagé au sein du capotage 1, tel que représenté sur les figures 4 et 5, grâce à une déformation élastique de la pièce souple surmoulée 6 en matériau élastomère joignant les deux parties 8a et 8b.

En effet, selon ce mode de réalisation, en cas de chute de la bouteille ou de choc sur le levier, celui-ci ne se casse pas mais subit une déformation élastique sans subir de cisaillement, en entrant dans l'évidement 3' de débattement du levier 8 et/ou dans la cuvette 13 aménagée dans le capotage 1, tel que représenté sur les figures 5 et 4, respectivement.

## Revendications

1. Robinet (7), notamment pour récipient (2) de fluide sous pression, comportant au moins un levier (8) d'actionnement déplaçable entre au moins une position d'ouverture et au moins une position de fermeture dudit robinet (7), **caractérisé en ce que** le levier (8) comprend au moins une zone (3) élastiquement déformable et/ou de prérupture.

2. Robinet selon la revendication 1, **caractérisé en ce que** le levier (8) comprend une partie distale (8b) et une partie proximale (8a), lesdites partie distale (8b) et partie proximale (8a) étant séparées par ladite zone (3) déformable et/ou de prérupture.

3. Robinet selon l'une des revendications 1 ou 2, **caractérisé en ce que**, dans la zone (3) de prérupture, le levier (8) comprend au moins une entaille (5) de prérupture, de préférence une entaille en "V".

4. Robinet selon l'une des revendications 1 à 3, **caractérisé en ce que** le levier (8) comprend au moins au niveau de l'entaille de prérupture (5), un revêtement (6), de préférence un gainage, en un matériau élastiquement déformable et résistant au déchirement.

5. Robinet selon la revendication 4, **caractérisé en ce que** le matériau élastiquement déformable et/ou résistant au déchirement est un matériau polymère et/ou élastomère, de préférence un polymère vinylique ou de type caoutchouc.

6. Robinet selon l'une des revendications 4 ou 5, **caractérisé en ce que** le matériau élastiquement déformable et résistant au déchirement est de couleur vive, de préférence d'un ton de rouge ou d'orange.

7. Ensemble détendeur de fluide sous pression équipé d'un robinet (7) selon l'une des revendications 1 à 6.

8. Récipient de fluide sous pression, notamment une bouteille de gaz (2) sous pression, **caractérisé en ce qu'**il est équipé d'un robinet (7) selon l'une des revendications 1 à 6 ou d'un ensemble détendeur selon la revendication 7.

9. Récipient de fluide sous pression selon la revendication 8, **caractérisé en ce qu'**il comporte, en outre, un capotage de protection (1) au sein duquel est aménagé au moins un évidement (3') de débattement dudit levier (8) entre au moins une position de fermeture (PF) et au moins une position d'ouverture (PO) dans laquelle l'extrémité (8a) proximale du levier (8) sort dudit capotage (1) par ledit évidement (3').

10. Utilisation d'un récipient contenant un gaz ou un mélange gazeux de soudage selon l'une des revendications 8 ou 9, équipé d'un robinet (7) selon l'une des revendications 1 à 6 ou d'un ensemble détendeur selon la revendication 7 dans une opération de soudage, de coupage ou de projection thermique.

## Patentansprüche

1. Ventil (7), insbesondere für einen Behälter (2) für Druckfluid, mit mindestens einem Betätigungshebel (8), der zwischen mindestens einer Öffnungsstellung und mindestens einer Schließstellung des Ventils (7) bewegt werden kann, **dadurch gekennzeichnet, dass** der Hebel (8) mindestens einen elastisch verformbaren und/oder Sollbruchbereich (3) aufweist.

2. Ventil nach Anspruch 1, **dadurch gekennzeichnet, dass** der Hebel (8) einen distalen Teil (8b) und einen proximalen Teil (8a) aufweist, wobei der distale Teil (8b) und der proximale Teil (8a) durch den verformbaren und/oder Sollbruchbereich (3) getrennt sind.

3. Ventil nach Anspruch 1 oder 2, **dadurch gekennzeichnet, dass** der Hebel (8) im Sollbruchbereich (3) mindestens eine Sollbruchkerbe (5), vorzugsweise eine V-förmige Kerbe, aufweist.

4. Ventil nach einem der Ansprüche 1 bis 3, **dadurch gekennzeichnet, dass** der Hebel (8) mindestens im Bereich der Sollbruchkerbe (5) eine Beschichtung (6), vorzugsweise eine Umhüllung, aus einem reißfesten, elastisch verformbaren Material aufweist.

5. Ventil nach Anspruch 4, **dadurch gekennzeichnet, dass** das elastisch verformbare und/oder reißfeste Material ein Polymer- und/oder Elastomermaterial, vorzugsweise ein Vinylpolymer oder kautschukartiges Polymer, ist.

6. Ventil nach Anspruch 4 oder 5, **dadurch gekennzeichnet, dass** das elastisch verformbare und reißfeste Material eine kräftige Farbe, vorzugsweise einen roten oder orangen Farbton, aufweist.

7. Druckminderventilanordnung für ein Druckfluid, die mit einem Ventil (7) nach einem der Ansprüche 1 bis 6 ausgestattet ist.

8. Druckfluidbehälter, insbesondere Druckgasflasche (2), **dadurch gekennzeichnet, dass** er mit einem Ventil (7) nach einem der Ansprüche 1 bis 6 oder einer Druckminderventilanordnung nach Anspruch 7 ausgestattet ist.

9. Druckfluidbehälter nach Anspruch 8, **dadurch gekennzeichnet, dass** er des Weiteren eine Schutzkappe (1) aufweist, in der mindestens eine Aussparung (3') zum Schwenken des Hebels (8) zwischen mindestens einer Schließstellung (PF) und mindestens einer Öffnungsstellung (PO), in der das proximale Ende (8a) des Hebels (8) durch die Aussparung (3') aus der Kappe (1) heraustritt, ausgebildet ist.

10. Verwendung eines ein Gas oder ein Schweißgasgemisch enthaltenden Behälters nach Anspruch 8 oder 9, der mit einem Ventil (7) nach einem der Ansprüche 1 bis 6 oder einer Druckminderventilanordnung nach Anspruch 7 ausgestattet ist, bei einem Schweiß- oder Schneidvorgang oder bei thermischem Spritzen.

## Claims

1. Valve (7), particularly for a container (2) of pressurized fluid, comprising at least one actuating lever (8) which can be moved between at least one position in which the said valve (7) is open and at least one position in which it is closed, **characterized in that** the lever (8) comprises at least one elastically deformable and/or pre-breakage zone (3).

2. Valve according to Claim 1, **characterized in that** the lever (8) comprises a distal part (8b) and a proximal part (8a), the said distal part (8b) and proximal part (8a) being separated by the said deformable and/or pre-breakage zone (3).

3. Valve according to either of Claims 1 and 2, **characterized in that**, in the pre-breakage zone (3), the lever (8) comprises at least one pre-breakage notch (5), preferably a V-shaped notch.

4. Valve according to one of Claims 1 to 3, **characterized in that** the lever (8) comprises, at least in the region of the pre-breakage notch (5), a covering (6), preferably a sheath, made of an elastically deformable and tear-resistant material.

5. Valve according to Claim 4, **characterized in that** the elastically deformable and/or tear-resistant material is a polymer and/or elastomer material, preferably a vinyl polymer or a material of the rubber type.

6. Valve according to either of Claims 4 and 5, **characterized in that** the elastically deformable and tear-resistant material is brightly coloured, preferably in a shade of red or orange.

7. Assembly for reducing the pressure of a pressurized fluid, equipped with a valve (7) according to one of Claims 1 to 6.

8. Container for pressurized fluid, particularly a cylinder (2) of pressurized gas, **characterized in that** it is equipped with a valve (7) according to one of Claims 1 to 6 or with a pressure-reducing assembly according to Claim 7.

9. Container for pressurized fluid according to Claim 8, **characterized in that** it further comprises a protective cover (1), in which is formed at least one aperture (3') in which the said lever (8) can move between at least one closed position (PF) and at least one open position (PO) in which the proximal end (8a) of the lever (8) emerges from the said cover (1) via the said aperture (3').

10. Use of a container containing a welding gas mixture or gas according to either of Claims 8 and 9, equipped with a valve (7) according to one of Claims 1 to 6 or with a pressure-reducing assembly according to Claim 7, in a welding, cutting or thermal spraying operation.
